# FASCICULE DE BREVET EUROPEEN

(11) **EP 3 253 325 B1**
(45) Date de publication et mention de la délivrance du brevet: **18.11.2020**
(21) Numéro de dépôt: 16716057.1
(22) Date de dépôt: 21.01.2016
(51) Int. Cl.: A61C 5/66, A61C 5/68, A61C 1/12

(54) **CAPSULE DE MÉLANGE POUR MATÉRIAU DENTAIRE, ET MÉTHODE DE PRÉPARATION DE MATÉRIAU DENTAIRE**
MISCHKAPSEL FÜR DENTALMATERIAL UND VERFAHREN ZUR HERSTELLUNG VON DENTALMATERIAL
MIXING CAPSULE FOR DENTAL MATERIAL, AND METHOD FOR PRODUCING DENTAL MATERIAL

(30) Priorité: 04.02.2015 CH 1452015
(43) Date de publication de la demande: 13.12.2017
(73) Titulaire: Rock Dental AG, 8852 Altendorf (CH)
(72) Inventeur: FEHLMANN, Marc, 8852 Altendorf (CH); BENOUSSAN, David, 75017 Paris (FR)
(74) Mandataire: P&TS SA (AG, Ltd.)
(86) Numéro de dépôt international: PCT/IB2016/050284
(87) Numéro de publication internationale: WO 2016/125036

(56) Documents cités:
- EP-A1- 0 077 150
- DE-A1- 2 736 928
- FR-A1- 2 285 110
- US-A- 4 277 184

## Description

### DOMAINE TECHNIQUE DE L'INVENTION

La présente invention concerne une capsule de préparation de mélange, en particulier pour soins dentaires, connectable de façon standard à un instrument grâce à son embout de connexion spécifique. La présente invention concerne aussi une méthode de préparation de matériau dentaire.

### ETAT DE LA TECHNIQUE ANTERIEURE

Face à la réalité des besoins en terme de santé bucco-dentaire des individus, le chirurgien-dentiste est amené à maîtriser une grande variété de soins sur les patients.

De nombreux soins requièrent par exemple l'application de matériaux dentaires, notamment de ciments dentaires, d'argile, de polymères, de résines, de composites etc, par exemple pour sceller une prothèse dentaire, combler les dépouilles de dents préparées, remplacer les parties manquantes des dents, comme support mécanique, fond protecteur de cavité, etc. Pour certaines opérations, le sang du patient doit être mélangé avec du matériau de greffe osseuse. De nombreux matériaux dentaires doivent être préparés peu de temps avant l'intervention en mélangeant deux composants. Par exemple, les ciments à base d'eau doivent être préparés en mélangeant le ciment et l'eau juste avant l'application du ciment, pour éviter qu'il ne durcisse. Ce mélange est classiquement effectué par le dentiste ou par son assistant, de manière manuelle, en utilisant différents outils tels que des plaques en verre et des spatules. Une telle manière de procéder permet certes d'adapter le soin au patient, mais elle présente toutefois certains inconvénients.

Par exemple, la préparation manuelle de pâte ou ciment pour soin dentaire présente des difficultés récurrentes, comme le contrôle du dosage précis du mélange nécessaire à la spécificité du problème bucco-dentaire du patient. Il est ainsi difficile pour le préparateur de contrôler parfaitement et de manière reproductible la quantité d'eau ajoutée à un ciment à base d'eau. La qualité du ciment obtenu varie donc d'une fois à l'autre, et d'un préparateur à l'autre.

Une telle préparation, lorsqu'elle est obtenue de manière artisanale, peut sécher relativement rapidement, contraignant ainsi le praticien à appliquer la préparation très rapidement.

De plus, la préparation de soins dentaires par mélange artisanal présente l'inconvénient de ne pas être homogène. Le mélange obtenu par intervention artisanale ne peut en effet pas être parfaitement lisse. Il peut ainsi comporter des grumeaux rendant difficile l'application de la pâte. Il peut en résulter une qualité de soin inégale.

Certains dentistes utilisent un vibreur pour mélanger les différents composants du matériau dentaire. Avec l'abandon progressif des amalgames dentaires au mercure, de tels vibreurs ont cependant tendance à disparaître des cabinets dentaires et les dentistes ne souhaitent plus s'équiper d'un tel appareil relativement bruyant et encombrant.

Un autre désagrément peut être relevé en présence d'une préparation artisanale pour soins dentaires. Le mélange manuel nécessite l'utilisation de différents composants destinés à être combinés afin de constituer des mélanges. Les diverses étapes relatives à la préparation des mélanges impliquent également d'utiliser différents outils et instruments permettant de mélanger et de travailler la pâte ou le ciment. Dans de telles conditions, le respect d'une hygiène stricte est difficile à atteindre. Divers risques de contamination sont donc constamment présents, malgré le fait que les soins soient effectués dans un milieu aseptisé.

Le document US3814387 propose un appareil pour les dentistes, permettant de mesurer et de mélanger des copeaux métalliques pour la préparation de la pâte de l'amalgame, avec une capsule contenant des composants préalablement mesurés pour la préparation de ciments dentaires et de résines synthétiques dentaires, le mélange étant effectué dans un seul boitier. Une telle architecture est encombrante, coûteuse, et requiert un matériel spécifique pour cette opération.

La demande US3640510 concerne une machine de mélange de composants utilisés en odontologie. L'élimination de l'air ou de bulles d'air étant nécessaire afin de garantir un résultat parfait lors de la solidification du composant, l'appareil comprend un récipient de mélange fermé, un dispositif d'agitation rotatif, et une pompe à vide pour le dispositif d'agitation tournant qui est entrainé par un moteur par l'intermédiaire d'un embrayage magnétique. Un interrupteur est prévu de manière à ce qu'après un temps prédéterminé, le fonctionnement de l'appareil de mélange est interrompu, la pompe à vide continuant cependant à fonctionner. Un tel concept est encombrant, coûteux, et occasionne des frais d'opération importants.

US1665260 décrit une capsule pour un produit dentaire à mélanger. La capsule comporte un seul compartiment et ne convient donc pas à des mélanges de deux composants.

US3715806 décrit une capsule pour un amalgame dentaire. La construction est adaptée à des pièces à main droites. La forme très allongée des capsules permet éventuellement d'appliquer le mélange directement dans la bouche, mais rend leur stockage peu pratique. Les composants dans les différents compartiments se mélangent difficilement entre eux. En outre, la vitesse de pénétration du premier composant dans le deuxième composant est mal contrôlée ; cette capsule est éventuellement adaptée au mélange d'amalgames, mais pas au mélange de ciment dentaire, car elle provoquerait immédiatement des grumeaux très difficiles à résorber par la suite.

EPO77150A1 divulgue une capsule de préparation d'amalgame dentaire obtenu par mélange de composants avant usage, comprenant une enceinte pourvue d'une pluralité de compartiments pour les composants à mélanger, et une valve pour isoler les composants les uns des autres lors du stockage. La capsule doit être secouée pour ouvrir la valve et obtenir le mélange. La qualité du mélange dépend cependant de l'énergie avec laquelle la capsule est secouée, et de la durée.

Pour pallier ces différents inconvénients, l'invention prévoit différents moyens techniques.

### EXPOSE DE L'INVENTION

Tout d'abord, un but de l'invention est de résoudre au moins en partie les problèmes de l'art antérieur évoqués ci-dessus.

Un autre but est de prévoir un système qui permette de réaliser des mélanges de matériaux dentaires avec une qualité optimale et reproductible.

Un autre but est de prévoir un système de préparation de mélange dentaire susceptible d'assurer des conditions d'hygiène de haut niveau.

Un autre but de l'invention est de concevoir un récipient permettant de faciliter le stockage des différents composants avant leur mélange.

Pour ce faire, l'invention prévoit une capsule de préparation de matériau dentaire ou chirurgical obtenus par mélange de composés avant usage, comprenant une enceinte pourvue d'au moins deux compartiments destinés à autant de composants à mélanger, et au moins une paroi d'isolation des composants. La paroi d'isolation des composants est prévue en mode stockage pour isoler les composants les uns des autres, et en mode de mélange pour permettre une communication fluidique entre les compartiments. La capsule comprend par ailleurs une tige d'entrainement adaptée à une pièce à main dentaire, par exemple une pièce à main dont une extrémité est conforme à la norme ISO 1797 pour fixation amovible avec une pièce à main. La capsule est en outre fermée de façon étanche de sorte que l'humidité ne puisse pénétrer depuis l'extérieur.

L'invention part notamment de la constatation que la pratique de l'odontologie moderne fait souvent recours à différents instruments tels que le contre-angle ou la pièce à main (collectivement désigné « pièce à main » par la suite). Cette pièce à main comprend un moteur (la turbine) pour entraîner à haute vitesse un outil amovible, par exemple une fraise dentaire, une mèche de perçage, etc. L'outil est fixé à la pièce à main au moyen d'une connexion faisant l'objet de normes, par exemple des normes ISO 1797-1 (pour les queues en matériaux métalliques) et ISO 1797-2 (queues en matière plastique), collectivement désignées par « norme ISO 1797.

Selon un aspect de l'invention, une telle pièce à main munie d'une connexion conforme à la norme ISO 1797 est utilisée d'une manière nouvelle, afin de mélanger les différents composants d'un matériau dentaire.

L'invention permet aussi d'améliorer le stockage des composants avant leur mélange, en les stockant dans une seule capsule munie de différents compartiments.

La capsule peut contenir des composants variés pour la préparation de différents mélanges ; par exemple différents types de ciments, des proportions d'eau et de ciment variables, ou d'autres composants. Le nombre de composants peut être égal ou supérieur à deux.

Des jeux de capsules contenant différents composants peuvent être proposés, permettant au médecin-dentiste de choisir un mélange particulier simplement en sélectionnant une capsule.

L'invention permet ainsi une mise en oeuvre simple, rapide, et propre.

La capsule comporte des compartiments agencés de façon concentriques.

La paroi d'isolation entre les compartiments peut être un disque positionné et dimensionné de façon à recouvrir la surface occupée par l'ensemble des compartiments concentriques.

Selon un mode de réalisation avantageux, les compartiments de la capsule peuvent également être agencés côte à côte, la paroi d'isolation entre les composants étant une membrane amovible, déchirable ou déformable.

Selon un autre mode de réalisation de l'invention, la capsule comprend une pluralité de bras mélangeurs disposés de façon à plonger dans le mélange à mixer lorsque la capsule est en mode mélange.

Selon une variante avantageuse, la capsule comprend une vis d'Archimède en communication fluidique avec la base d'un des compartiments et agencée de façon à transporter le composant présent dans ce compartiment lors d'une mise en rotation de la tige d'entraînement.

De manière avantageuse, la tige d'entraînement est en polymère injecté.

Encore de manière avantageuse, le couvercle et l'enceinte sont en SBS injecté. D'autres matériaux peuvent être envisagés.

Selon un mode de réalisation avantageux, la capsule comprend une baïonnette agencée pour positionner le couvercle selon trois positions, au choix :
une position fermée ;
une position de mélange ;
une position où le couvercle est retiré.

Selon un autre mode de réalisation, le couvercle est maintenu sur l'enceinte sans baïonnette, par exemple au moyen de ruban adhésif.

De manière avantageuse, la capsule est spécifiquement adaptée au stockage et à la préparation de ciment dentaire.

En variante, la capsule est spécifiquement adaptée pour le stockage et la préparation de composition pour chirurgie plastique.

Selon une autre variante de réalisation, la capsule est spécifiquement adaptée pour le stockage et la préparation de composition pour soins de pédicure.

Selon une autre variante de réalisation, la capsule est spécifiquement adaptée pour le stockage et la préparation de composition pour interventions orthopédiques.

La présente invention concerne aussi un procédé de préparation de matériau dentaire à l'aide d'une telle capsule.

### DESCRIPTION DES FIGURES

Tous les détails de réalisation sont donnés dans la description qui suit, complétée par les figures 1A à 6B présentées uniquement à des fins d'exemples non limitatifs, et dans lesquelles:
- la figure 1A est une représentation en élévation de la pièce à main reliée à la capsule de préparation pour soins dentaires;
- la figure 1B est une illustration en perspective de la pièce à main reliée à la capsule de préparation pour soins dentaires;
- la figure 2A est une représentation en perspective éclatée des éléments constitutifs de la capsule ;
- la figure 2B est une illustration en élévation des éléments constitutifs de la capsule avant assemblage ;
- la figure 2C représente en perspective la capsule après assemblage, laquelle est reliée à la queue pour pièce à main avant utilisation ;
- la figure 3A illustre en perspective un couvercle ;
- la figure 3B est une représentation en élévation du même couvercle ;
- la figure 4A est une représentation en perspective du couvercle avec une pluralité de bras mélangeurs vu de dessous ;
- la figure 4B est une illustration du couvercle avec pluralité de bras mélangeurs vu de dessous ;
- la figure 4C est une représentation en élévation du couvercle avec pluralité de bras mélangeurs;
- la figure 5A représente une vue en élévation de l'enceinte dans laquelle est effectué le mélange ;
- la figure 5B illustre la même enceinte de mélange selon une représentation en perspective ;
- la figure 6A est une autre représentation en perspective du couvercle avec pluralité de bras mélangeurs;
- la figure 6B est une illustration en perspective du couvercle de la capsule relié à la queue normée de la pièce à main ;
- la figure 7 est une vue en coupe d'un détail du couvercle, de l'enceinte et des bras mélangeurs ;
- la figure 8 est une vue en coupe d'un détail de l'enceinte et des bras mélangeurs ;
- la figure 9 est une vue latérale d'une capsule fermée par un ruban adhésif.

### DESCRIPTION DETAILLEE DE L'INVENTION

La capsule pour soins dentaires 3 illustrée sur les figures est destinée à loger différents composants afin de les mélanger au moment de l'utilisation dans le but d'obtenir un matériau dentaire, par exemple une pâte, spécifiquement adaptée à la santé bucco-dentaire de chacun des patients.

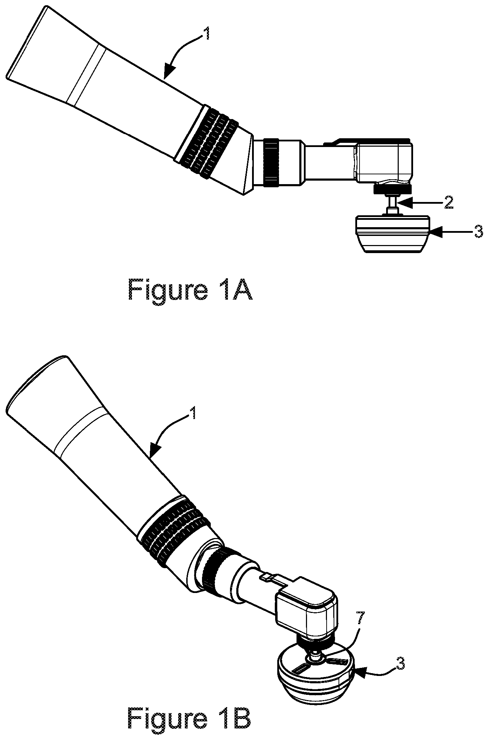

Les figures 1A et 1B représentent la capsule 3 de stockage et préparation de composants pour soins dentaires lorsqu'elle est raccordée à une pièce à main (ici un contre-angle) 1 par une queue normée 2.

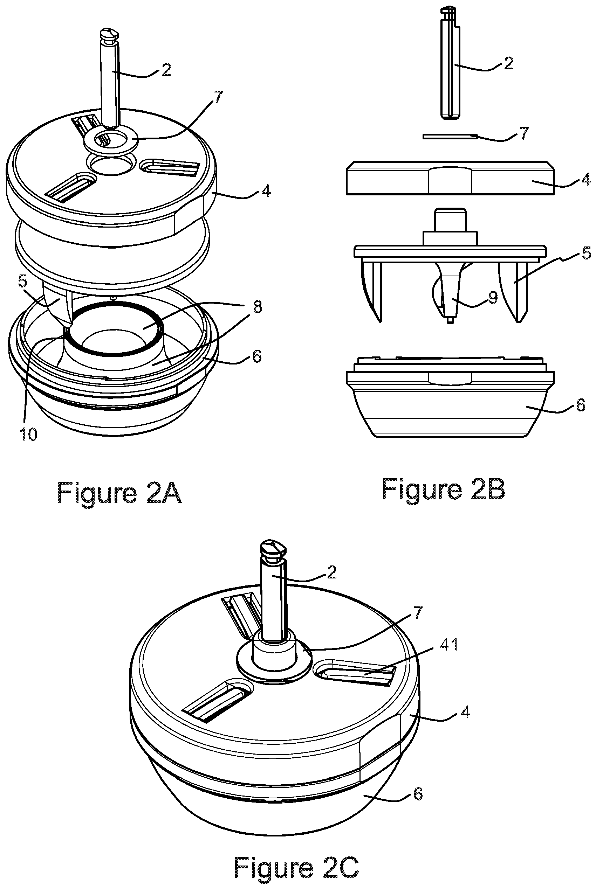

Les figures 2A et 2B illustrent avec des vues éclatées les différents composants de la capsule 3. La capsule 3 est ainsi constituée d'une enceinte 6 au sein de laquelle le mélange pourra être effectué. L'enceinte 6 est subdivisée en deux compartiments 8 isolés l'un de l'autre. L'un est destiné à contenir un premier composant, par exemple un composant poudreux, et l'autre est voué à recueillir un deuxième composant, par exemple un composant liquide. Un tel agencement en compartiments permet de doser très précisément les composants selon les quantités désirées pour obtenir une préparation adaptée à un problème particulier. Ces composants sont isolés l'un de l'autre en mode stockage, avant que la capsule 3 ne soit utilisée par le dentiste. Les composants seront ensuite mis en contact l'un avec l'autres en mode mélange, lorsque la capsule 3 est entrainée par la rotation de la queue 2 grâce à la pièce à main 1.

La figure 2C permet de visualiser en perspective la capsule 3 lorsqu'elle est prête à être utilisée. Sur cette illustration, la queue pour pièce à main normée 2 est insérée dans la capsule, afin de pouvoir l'actionner avec la pièce à main.

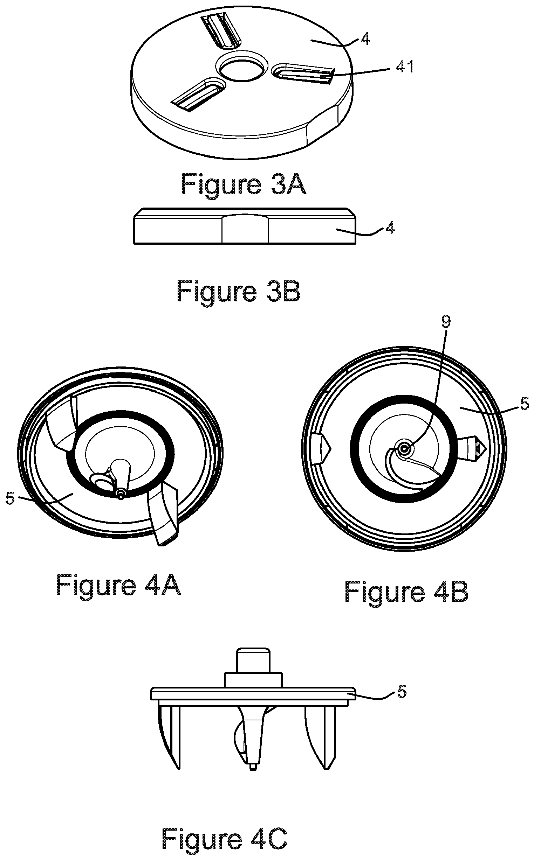

Les figures 3A et 3B représentent la partie externe 4 du couvercle de la capsule 4. Celle-ci permet de maintenir les composants dans la capsule lors du mélange, mais également de préserver l'aseptisation des composants stockés. Le bord du couvercle présente deux méplats permettant de le maintenir avec un outil, par exemple une clé à fourche, pour ouvrir le couvercle afin d'accéder au mélange. On observe aussi sur cette figure des ouvertures, dans cet exemple trois ouvertures radiales, qui permettent de soulever la partie interne 5 du couvercle et d'assurer une pression sur cette partie interne.

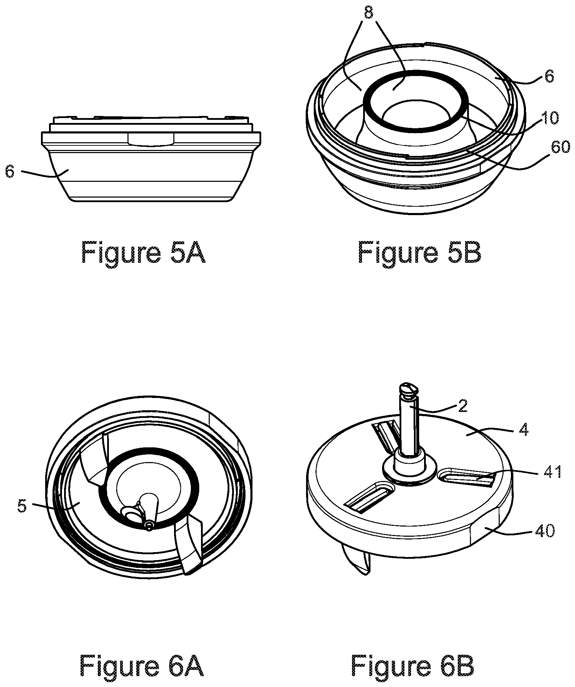

Les figures 4A, 4B, 4C et 6A représentent la partie interne du couvercle 5 vue de dessous, lorsqu'elle est intégrée à la partie externe 4. On observe sur ces vues que cette partie forme une hélice et comporte deux bras mélangeurs 5 qui pénètrent dans un des compartiments et permettent de mélanger les différents composants lorsque ces bras sont mis en rotation par rapport à l'enceinte 6 de la capsule grâce à la pièce à main. La face inférieure du couvercle sert en outre de paroi d'isolation entre les compartiments 8, permettant d'éviter un transfert de composant lors du transport ou du stockage de la capsule.

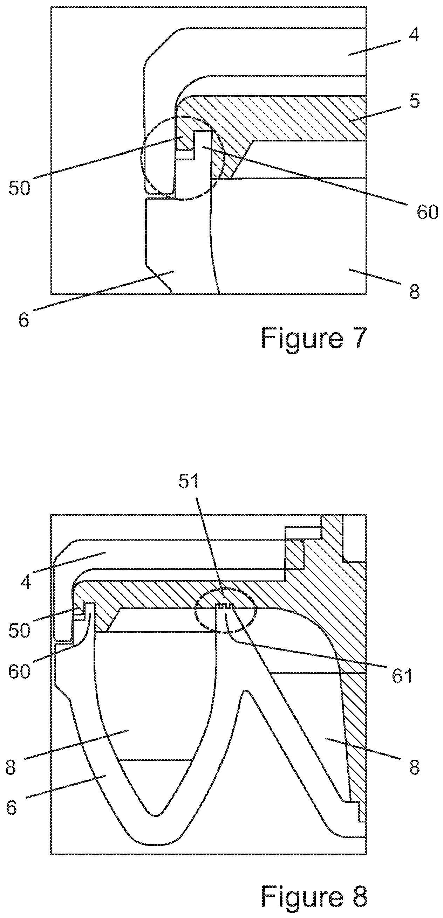

Les figures 7 et 8 montrent la manière dont la partie interne 5 du couvercle se referme de manière étanche sur l'enceinte 6, en évitant le risque de passage de liquide ou de poudre d'un compartiment à l'autre ou entre un compartiment et l'extérieur de la capsule.

La figure 7 montre la manière dont l'étanchéité est obtenue entre la face inférieure de la partie interne 5 du couvercle et le bord externe de l'enceinte 6. Dans ce mode de réalisation, un rebord annulaire 50 sous la partie interne 5 du couvercle 4,5 vient s'emboiter contre une portée annulaire 60 sur le rebord externe de l'enceinte 6, de manière à empêcher les échanges de liquide ou de poudre entre l'extérieur de la capsule et le compartiment externe. Au moins une des portées 50 ou 60 est en matériau plastique ou dans une autre matière déformable élastiquement de manière à assurer l'étanchéité. Un joint annulaire peut être prévu pour améliorer cette étanchéité.

La figure 8 montre la manière dont le couvercle 4 assure l'étanchéité entre les deux compartiments de l'enceinte 6. Dans ce mode de réalisation, le rebord 61 entre les deux compartiments vient s'appuyer élastiquement contre une portion 51 de la face inférieure de la partie interne du couvercle 5, de manière à empêcher les infiltrations d'eau ou de poudre d'un compartiment à l'autre de l'enceinte. Le rebord 61 et/ou la face inférieure 51 peuvent être nervurés pour assurer un emboitement étanche. Le rebord 61 et/ou la face inférieure 51 peuvent être réalisés dans un matériau déformable élastiquement de manière à assurer l'étanchéité. Un joint annulaire peut être prévu pour améliorer cette étanchéité.

Un racleur pourrait aussi être prévu pour être entraîné par la pièce à main afin de racler le couvercle lors du mélange.

Les figures 5A et 5B représentent l'enceinte 6 de la capsule, à l'intérieur de laquelle sont agencés les différents compartiments 8. En mode stockage, les compartiments 8 sont isolés l'un de l'autre grâce à la partie interne du couvercle 4 tel que décrit ci-après.

Pour la mise en oeuvre des diverses phases utiles à la préparation et l'application du mélange préparé, le couvercle 4,5 de la capsule est avantageusement réalisé en deux parties. La partie interne 5 porte les bras mélangeurs. La partie externe 4 permet de fermer l'ensemble, et d'ajuster la position relative des différents éléments en fonction de la phase en cours. Ainsi, dans l'exemple illustré, une baïonnette permet de sélectionner trois positions, comme suit :
- une position fermée, dans laquelle les différents compartiments sont isolés entre eux ;
- une position de mélange, où les composants se combinent et se mélangent ;
- une position où le couvercle est retiré, pour permettre au praticien d'accéder après mélange au matériau dentaire préparé.

Le passage d'une position à l'autre se fait en tournant la portion externe du couvercle 4 par rapport à l'enceinte 6, par exemple à la main.

Dans un autre mode de réalisation, la partie externe du couvercle 4 ne doit pas être pivotée soulever l'hélice et pour permettre le passage de liquide ou de poudre d'un compartiment à l'autre. Dans ce cas, la partie interne 5 du couvercle (l'hélice) se soulève en tournant contre le rebord incliné de l'enceinte 6 lorsqu'elle est mise en rotation, de manière à dissocier la face interne du couvercle 4,5 de l'enceinte 6 et de permettre le mélange. Dans ce cas, le passage de la position fermée à la position de mélange se fait automatiquement lors de l'entraînement de la tige d'entraînement par la pièce à main, qui produit un déplacement et éventuellement une déformation de la paroi d'isolation.

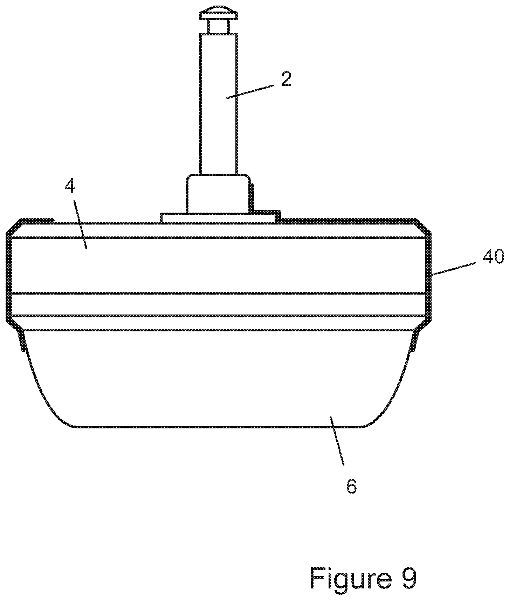

Dans un autre mode de réalisation illustré sur la figure 9, le couvercle est lié à l'enceinte au moyen d'un ruban adhésif 40 en position fermée. Il peut passer en position de mélange puis en position de retrait en retirant l'adhésif et en le faisant tourner par rapport à l'enceinte.

Le ruban adhésif 40, ou un autre adhésif, peut aussi recouvrir les ouvertures ménagées dans le couvercle afin d'empêcher les poussières d'entrer.

Cette architecture permet au praticien de préparer des compositions spécifiques sans se salir. Pour cela le dentiste positionne la baïonnette en mode mélange afin de déplacer la portion du couvercle servant de paroi d'isolation entre les compartiments. Il fixe ensuite la capsule 3 à la pièce à main 1, et actionne cette dernière pour obtenir la préparation mélangée. Si nécessaire, l'enceinte 6 peut être maintenue pendant l'entraînement des bras mélangeurs, à la main ou grâce à un outil tel qu'une clé à fourche qui permet de tenir le couvercle par des méplats prévus à cet effet sur l'enceinte 6.

Une fois le mélange effectué, le dentiste retire le couvercle et prélève la préparation afin de l'appliquer immédiatement.

Les figures 2B et 4C permettent de visualiser une vis d'Archimède 9 prévue sous la partie interne du couvercle 4. La vis d'Archimède 9 permet de faire monter progressivement le composant, par exemple un liquide, contenu dans le compartiment central pour faciliter le transvasement vers le compartiment périphérique. Le liquide se déverse alors facilement et progressivement dans le compartiment externe contenant par exemple du ciment, afin d'obtenir un mélange prêt à être appliqué.

Selon une variante non illustrée, plusieurs capsules 3 peuvent être jumelées, par exemple superposées ou juxtaposées, pour permettre de préparer simultanément plusieurs mélanges, ou pour élaborer des mélanges complexes à partir de plusieurs capsules.

La préparation pâteuse peut être obtenue après avoir fixé la capsule 3 à la pièce à main 1, en actionnant ensuite la pièce à main 1 tout en maintenant l'extérieur de l'enceinte 6 pour éviter toute rotation de cette dernière. De cette façon, la pièce à main ne fait pivoter que les bras mélangeurs 5. Selon un tel mode de réalisation, la pâte obtenue est très homogène.

Les capsules selon l'invention permettent au dentiste de gagner du temps dans la préparation du soin, et garantissent une stricte hygiène à la préparation puisqu'il limite les risques de contamination. Par ailleurs, une telle architecture ne nécessite pas d'utiliser d'autres outils que la pièce à main 1 et la queue 2reliée à la pièce à main.

Dans une autre version, le couvercle intègre la queue 2 qui est insérée dans la pièce à main. Une queue remplaçable et/ou réutilisable peut être employée.

La queue 2 peut être intégrée à la capsule, ou être réutilisable. Elle peut par exemple être réalisée en métal, ou avantageusement en polymère renforcé, par exemple en polymère renforcé à la fibre de verre ou de carbone.

Les composants peuvent être stockés et protégés dans la capsule préalablement au mélange. Il est aussi possible d'ouvrir la capsule avant le mélange, d'y ajouter des composants ou de modifier leurs proportions, puis de refermer la capsule afin d'obtenir ensuite un mélange personnalisé.

Le système préalablement décrit peut être avantageusement utilisé dans le domaine de l'odontologie, puisqu'il présente l'avantage de préparer rapidement une préparation pour soins dentaires de façon très hygiénique. Un autre avantage réside également dans le fait que des prédosages très précis sont effectués. Cela permet des gains de temps importants lors de la phase de préparation des soins.

L'invention préalablement décrite peut être interprétée plus largement, c'est-à-dire que les capsules 3 peuvent être utilisées à des fins autres qu'odontologiques, comme par exemple dans le domaine de la chirurgie, de la chirurgie esthétique, de l'orthodontie, etc,

## Revendications

1. Capsule (3) de préparation de matériau dentaire ou chirurgical obtenus par mélange de composants avant usage, comprenant :
une enceinte (6) pourvue d'une pluralité de compartiments (8) agencés de façon concentrique et destinés à autant de dits composants à mélanger,
au moins une paroi d'isolation (4, 10) pour isoler les composants les uns des autres lors du stockage et pour permettre une communication fluidique entre les compartiments (8) lors du mélange,
une tige d'entraînement (2) dont une extrémité permet une fixation amovible à une pièce à main (1), par exemple conformément à la norme ISO 1797.

2. Capsule selon la revendication 1, dans laquelle la paroi d'isolation (4) entre les compartiments (8) recouvre la surface occupée par l'ensemble des compartiments (8) concentriques.

3. Capsule selon la revendication 2, la paroi d'isolation (4) comportant une face inférieure en appui contre le rebord (61) entre les compartiments (8).

4. Capsule (3) selon l'une des revendications 1 à 3, la paroi d'isolation (4) comprenant une pluralité de bras mélangeurs (5), disposés de façon à plonger dans le mélange à mixer lorsque la capsule (3) est en mode de mélange.

5. Capsule selon la revendication 4, la paroi d'isolation (4) étant liée à la tige d'entraînement (2) de manière à pouvoir être tournée par ladite tige d'entraînement afin de mélanger le mélange à mixer.

6. Capsule selon la revendication 5, la paroi d'isolation (4) étant en outre agencée de manière à pouvoir être soulevée par ladite tige d'entraînement afin de mélanger le mélange à mixer.

7. Capsule (3) selon l'une des revendications 1 à 6, comprenant une vis d'Archimède (9) en communication fluidique avec un des compartiments (8) et agencée de façon à transporter le composant présent dans ce compartiment lors d'une mise en rotation de la tige d'entraînement.

8. Capsule (3) selon la revendication 1, dans laquelle les compartiments (8) sont agencés côte à côte, la paroi d'isolation (10) entre les composants comprenant une membrane amovible, déchirable ou déformable.

9. Capsule (3) selon l'une des revendications 1 à 8, dans laquelle la tige d'entraînement (2) est en polymère injecté.

10. Capsule (3) selon l'une des revendications 1 à 9 dans laquelle le couvercle (4) et l'enceinte (6) sont en SBS injectés.

11. Capsule (3) selon l'une des revendications 1 à 7, comprenant une baïonnette agencée pour positionner le couvercle selon deux positions, au choix :
une position fermée ;
une position où le couvercle est retiré.

12. Capsule (3) selon l'une des revendications 1 à 11, comprenant des composants destinés à la préparation de ciment dentaire.

13. Procédé de préparation de matériau dentaire ou chirurgical obtenus par mélange de composants avant usage, comprenant :
fixation d'une capsule selon l'une des revendications 1 à 12 à une pièce à main ;
entraînement de la tige d'entraînement de ladite capsule au moyen de ladite pièce à main ;
ouverture du couvercle de ladite capsule pour accéder audit matériau ainsi mélangé.

## Patentansprüche

1. Kapsel (3) zur Zubereitung von durch Mischen von Komponenten vor der Verwendung erhaltenem Dental- oder Chirurgiematerial, die enthält:
einen Behälter (6), der mit einer Vielzahl von Abteilen (8) versehen ist, die konzentrisch angeordnet und für ebenso viele zu mischende Komponenten bestimmt sind,
mindestens eine Isolierwand (4, 10), um die Komponenten bei der Lagerung voreinander zu isolieren und um beim Mischen eine Fluidverbindung zwischen den Abteilen (8) zu erlauben,
eine Antriebsstange (2), von der ein Ende eine lösbare Befestigung an einem Handstück (1) erlaubt, zum Beispiel gemäß der Norm ISO 1797.

2. Kapsel nach Anspruch 1, wobei die Isolierwand (4) zwischen den Abteilen (8) die von der Gesamtheit der konzentrischen Abteile (8) eingenommene Fläche bedeckt.

3. Kapsel nach Anspruch 2, wobei die Isolierwand (4) eine Unterseite in Auflage gegen die Randleiste (61) zwischen den Abteilen (8) aufweist.

4. Kapsel (3) nach einem der Ansprüche 1 bis 3, wobei die Isolierwand (4) eine Vielzahl von Mischarmen (5) enthält, die so angeordnet sind, dass sie in die zu mischende Mischung eintauchen, wenn die Kapsel (3) im Mischmodus ist.

5. Kapsel nach Anspruch 4, wobei die Isolierwand (4) so mit der Antriebsstange (2) verbunden ist, dass sie von der Antriebsstange gedreht werden kann, um die zu mischende Mischung zu mischen.

6. Kapsel nach Anspruch 5, wobei die Isolierwand (4) außerdem so angeordnet ist, dass sie von der Antriebsstange angehoben werden kann, um die zu mischende Mischung zu mischen.

7. Kapsel (3) nach einem der Ansprüche 1 bis 6, die eine Förderschnecke (9) aufweist, die mit einem der Abteile (8) in Fluidverbindung steht und so angeordnet ist, dass sie die in diesem Abteil vorhandene Komponente bei einer Drehung der Antriebsstange transportieren kann.

8. Kapsel (3) nach Anspruch 1, wobei die Abteile (8) nebeneinander angeordnet sind, wobei die Isolierwand (10) zwischen den Komponenten eine entfernbare, zerreißbare oder verformbare Membran enthält.

9. Kapsel (3) nach einem der Ansprüche 1 bis 8, wobei die Antriebsstange (2) aus eingespritztem Polymer ist.

10. Kapsel (3) nach einem der Ansprüche 1 bis 9, wobei der Deckel (4) und der Behälter (6) aus eingespritztem SBS sind.

11. Kapsel (3) nach einem der Ansprüche 1 bis 7, die ein Bajonett enthält, das eingerichtet ist, um den Deckel wahlweise gemäß zwei Stellungen zu positionieren:
einer geschlossenen Stellung;
einer Stellung, in der der Deckel entfernt ist.

12. Kapsel (3) nach einem der Ansprüche 1 bis 11, die zur Zubereitung eines Zahnzements bestimmte Komponenten enthält.

13. Verfahren zur Zubereitung von durch Mischen von Komponenten vor der Verwendung erhaltenem Dental- oder Chirurgiematerial, das enthält:
Befestigung einer Kapsel nach einem der Ansprüche 1 bis 12 an einem Handstück;
Antrieb der Antriebsstange der Kapsel mittels des Handstücks;
Öffnen des Deckels der Kapsel für den Zugang zum so gemischten Material.

## Claims

1. Capsule (3) for preparing dental or surgical material obtained by mixing components prior to use, comprising:
a chamber (6) provided with a plurality of compartments (8) which are arranged concentrically and intended for that same number of said components that are to be mixed,
at least one isolation wall (4, 10) for isolating the components from one another during storage and for allowing fluidic communication between the compartments (8) during mixing,
a drive rod (2) one end of which allows removable attachment to a handpiece (1), for example in accordance with standard ISO 1797.

2. Capsule according to Claim 1, in which the isolation wall (4) between the compartments (8) lids the surface area occupied by all of the concentric compartments (8).

3. Capsule according to Claim 2, the isolation wall (4) comprising a lower face bearing against the rim (61) between the compartments (8).

4. Capsule (3) according to one of Claims 1 to 3, the isolation wall (4) comprising a plurality of mixing arms (5) arranged in such a way as to dip into the mixture that is to be mixed when the capsule (3) is in mixing mode.

5. Capsule according to Claim 4, the isolation wall (4) being connected to the drive rod (2) in such a way as to be able to be turned by the said drive rod in order to mix the mixture that is to be mixed.

6. Capsule according to Claim 5, the isolation wall (4) also being arranged in such a way as to be able to be lifted by the said drive rod so as to mix the mixture that is to be mixed.

7. Capsule (3) according to one of Claims 1 to 6, comprising an Archimedean screw (9) in fluidic communication with one of the compartments (8) and arranged in such a way as to transport the component present in this compartment as the drive rod rotates.

8. Capsule (3) according to Claim 1, in which the compartments (8) are arranged side by side, the isolation wall (10) between the components comprising a removable, tearable or deformable membrane.

9. Capsule (3) according to one of Claims 1 to 8, in which the drive rod (2) is made of injection moulded polymer.

10. Capsule (3) according to one of Claims 1 to 9, in which the lid (4) and the chamber (6) are made of injection moulded SBS.

11. Capsule (3) according to one of Claims 1 to 7, comprising a bayonet designed to position the lid in two positions, as desired:
a closed position;
a position in which the lid is removed.

12. Capsule (3) according to one of Claims 1 to 11, comprising components intended for the preparation of dental cement.

13. Method for preparing dental or surgical material obtained by mixing components prior to use, comprising:
fixing a capsule according to one of Claims 1 to 12 to a handpiece;
driving the drive rod of the said capsule using the said handpiece;
opening the lid of the said capsule in order to access the said material thus mixed.
